(19) Europäisches Patentamt
European Patent Office
Office européen des brevets

(11) **EP 2 236 536 B1**

(12) **EUROPEAN PATENT SPECIFICATION**

(45) Date of publication and mention of the grant of the patent:
**28.11.2012 Bulletin 2012/48**

(51) Int Cl.:
***C08G 18/32*** *(2006.01)* ***C08G 18/38*** *(2006.01)*
***C08G 18/10*** *(2006.01)* ***C08G 18/12*** *(2006.01)*
***G02B 1/04*** *(2006.01)*

(21) Application number: **10006993.9**

(22) Date of filing: **06.12.2006**

(54) **Polyurethane (ureas) and methods of preparation**

Polyurethanharnstoffe sowie Verfahren zu deren Herstellung

Polyuréthane-urées et procédés de préparation

(84) Designated Contracting States:
**FR**

(30) Priority: **16.12.2005 US 303671**
**16.12.2005 US 303892**

(43) Date of publication of application:
**06.10.2010 Bulletin 2010/40**

(62) Document number(s) of the earlier application(s) in accordance with Art. 76 EPC:
**06849044.0 / 1 960 450**

(73) Proprietor: **PPG Industries Ohio, Inc.**
**Cleveland, OH 44111 (US)**

(72) Inventors:
- **Rukavina, Thomas G.**
  **New Kensington, PA 15068 (US)**
- **Robinson, Daryl J.**
  **Monroeville, Pennsylvania 15146 (US)**
- **Bojkova, Nina V.**
  **Monroeville, Pennsylvania 15146 (US)**

(74) Representative: **Polypatent**
**Braunsberger Feld 29**
**51429 Bergisch Gladbach (DE)**

(56) References cited:
**EP-A- 0 780 413** **WO-A-03/042270**
**WO-A-03/044070** **US-A- 4 101 529**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to polyurethane(ureas), and methods for their preparation.

A number of organic polymeric materials, such as plastics, have been developed as alternatives and replacements for glass in applications such as optical lenses, fiber optics, windows and automotive, nautical and aviation transparencies. These polymeric materials can provide advantages relative to glass, including, shatter resistance, lighter weight for a given application, ease of molding and ease of dying. However, the refractive indices of many polymeric materials are generally lower than that of glass. In ophthalmic applications, the use of a polymeric material having a lower refractive index will require a thicker lens relative to a material having a higher refractive index. A thicker lens is not desirable.

Thus, there is a need in the art to develop a polymeric material having at least one of the following properties: an adequate refractive index, light weight/low density, good impact resistance/strength, good optical clarity, good rigidity/hardness, good thermal properties, and ease in processing of optical lenses made from said material.

In non-limiting embodiment, polyurethane(urea) of the present invention can be the reaction product of polyisocyanate; trifunctional or higher-functional polyol having a molecular weight of less than or equal to 200 grams/mole; diol having a molecular weight of less than or equal to 200 grams/mole; and diamine in a one-pot process.

In yet another non-limiting embodiment, the polyurethane (urea) of the present invention can be prepared by (a) reacting polyisocyanate with trifunctional or higher-functional polyol having molecular weight of less than or equal to 200 grams/mole to form isocyanate terminated polyurethane prepolymer; and (b) reacting said polyurethane prepolymer with active hydrogen-containing material, wherein said active hydrogen-containing material can include diol having molecular weight of less than or equal to 200 grams/mole and diamine. In this non-limiting embodiment, said active hydrogen-containing material can optionally further comprise trifunctional or higher-functional polyol, and/or trifunctional or higher-functional polyamine.

As used herein and in the claims, the terms "isocyanate" includes unblocked compounds capable of forming a covalent bond with a reactive group such as thiol, hydroxyl, or amine functional group. In a non-limiting embodiments, the polyisocyanate of the present invention can contain at least two isocyanate (NCO) groups.

In alternate non-limiting embodiments, the polyurethane(urea) of the invention when polymerized can produce a polymerizate having a refractive index of at least 1.50, or at least 1.53, or at least 1.55, or at least 1.60. In further non-limiting embodiments, wherein the polyurethane(urea) of the present invention includes materials containing at least one aromatic ring the polyurethane(urea) when polymerized can produce a polymerizate having a refractive index of at least 1.53, or at least 1.55, or at least 1.56, or at least 1.57, or at least 1.58, or at least 1.59, or at least 1.60, or at least 1.62, or at least 1.65. In further alternate non-limiting embodiments, the polyurethane(urea) of the invention when polymerized can produce a polymerizate having an Abbe number of at least 30, or at least 32, or at least 35, or at least 38, or at least 39, or at least 40, or at least 44. The refractive index and Abbe number can be determined by methods known in the art such as American Standard Test Method (ASTM) Number D 542-00. Further, the refractive index and Abbe number can be determined using various known instruments. In a non-limiting embodiment of the present invention, the refractive index and Abbe number can be measured in accordance with ASTM D 542-00 with the following exceptions : (i) test one to two samples/specimens instead of the minimum of three specimens specified in Section 7.3; and (ii) test the samples unconditioned instead of conditioning the samples/specimens prior to testing as specified in Section 8.1. Further, in a non-limiting embodiment, an Atago, model DR-M2 Multi-Wavelength Digital Abbe Refractometer can be used to measure the refractive index and Abbe number of the samples/specimens.

Good or adequately high rigidity/hardness and/or thermal properties are desirable characteristics for a polymerizate in order for it to be useful for optical/ophthalmic lens applications because high rigidity/hardness and/or thermal properties may be related to at least one of improved accuracy, processing yields, and durability when said polymerizate is subjected to processes related to manufacture of ophthalmic lens article, such as but not limited to surfacing, edging, and coating processes.

In a non-limiting embodiment, the polyurethane(urea) when polymerized can produce a polymerizate with adequately high hardness. Hardness can be determined by methods known in the art. In a non-limiting embodiment, hardness can be measured in accordance with ISO standard test method BS EN ISO 14577-1:2002. Further, in a non-limiting embodiment, a Fischer Scope H-100 instrument, supplied by Fischer Technology, Inc., can be used to measure the Martens Hardness, in accordance with BS EN ISO 14577-1:2002, and said Martens Hardness can be reported in the units of Newtons(N)/$mm^2$.

In another non-limiting embodiment, the polyurethane(urea) of the present invention when polymerized can produce a polymerizate having Martens Hardness (HM 0.3/15/0) of greater than 80, or greater than 100, or greater than 110, or greater than 120, or greater than 140 Newton/$mm^2$; or less than 250, or less than 200 Newton/$mm^2$.

In a non-limiting embodiment, the polyurethane(urea) when polymerized can produce a polymerizate with adequately high thermal properties. Thermal properties can be determined by methods known in the art. In a non-limiting embodiment, thermal properties can be measured in accordance with ASTM D648 Method B. Further, in a non-limiting

embodiment, thermal properties of a polymerizate can be reported as Heat Distortion Temperature (i.e., temperature at which 0.254 mm (10 mils) deflection of sample bar occurs) and Total Deflection Temperature (i.e., temperature at which 2.54 mm (100 mils) deflection occurs), under the conditions of this test method. In a further non-limiting embodiment, the test can be carried out using an HDT Vicat instrument, supplied by CEAST USA, Inc.

In alternate non-limiting embodiments, the polyurethane(urea) of the present invention when polymerized can produce a polymerizate having Heat Distortion Temperature of at least 80 °C, or at least 90 °C, or at least 100 °C or at least 110 °C.

In a non-limiting embodiment, polyurethane(urea) when polymerized can produce a polymerizate having adequately good impact resistance/strength. Impact resistance can be measured using a variety of conventional methods known to one skilled in the art.

In a non-limiting embodiment, the impact resistance can be measured using the Impact Energy Test, in which steel balls of increasing weight are successively dropped from a height of 1.27 meters onto a flat sheet sample of the polymerizate with a thickness of 3 mm, and which is supported on a neoprene O-ring, with inner diameter of 25 mm and thickness of 2.3 mm, affixed to a cylindrical steel holder. The sheet is determined to have passed the test if the sheet does not fracture. The sheet is determined to have failed the test when the sheet fractures. As used herein, the term "fracture" refers to a crack through the entire thickness of the sheet into two or more separate pieces, or detachment of one or more pieces of material from the backside of the sheet (i.e., the side of the sheet opposite the side of impact). The impact strength of the sample is reported as the impact energy (Joules) that corresponds to the highest level (i.e., largest ball) that the flat sheet passes, as is described in greater detail in the Experimental section herein.

In an alternate non-limiting embodiment, using the Impact Energy Test as described herein, the polyurethane (urea) of the present invention when polymerized can produce a polymerizate with impact strength of at least 1.0 Joule, or at least 2.0 Joules, or at least 4.95 Joules.

In alternate non-limiting embodiments, the amounts of polyisocyanate and the amounts of trifunctional or higher-functional polyol, used to prepare polyurethane prepolymer can be selected such that the viscosity of said prepolymer is less than 15,000 cps, or less than 8,000 cps, or less than 2,000 cps, measured at 73 °C, using a Brookfield CAP 2000+ viscometer.

Polyisocyanates useful in the preparation of the polyurethane(urea) of the present invention are numerous and widely varied. Suitable polyisocyanates for use in the present invention can include but are not limited to polymeric polyisocyanates; aliphatic linear polyisocyanates; aliphatic branched polyisocyanates; cycloaliphatic polyisocyanates wherein one or more of the isocyanato groups are attached directly to the cycloaliphatic ring and cycloaliphatic polyisocyanates wherein one or more of the isocyanato groups are not attached directly to the cycloaliphatic ring; and aromatic polyisocyanates wherein one or more of the isocyanato groups are attached directly to the aromatic ring, and aromatic polyisocyanates wherein one or more of the isocyanato groups are not attached directly to the aromatic ring.

Non-limiting examples can include polyisocyanates having <u>urethane</u> backbone linkages (-NH-C(O)-O-),

The molecular weight of the polyisocyanate can vary widely. In alternate non-limiting embodiments, the number average molecular weight (Mn) of each can be at least 100 grams/mole, or at least 150 grams/mole, or less than 15,000 grams/mole, or less than 5000 grams/mole. The number average molecular weight can be determined using known methods. The number average molecular weight values recited herein and the claims were determined by gel permeation chromatography (GPC) using polystyrene standards.

Non-limiting examples of suitable polyisocyanates can include but are not limited to those described in WO 2004/060951 A1 at paragraphs [0013] to [0035];

In further alternate non-limiting embodiments, the polyisocyanate can include meta-tetramethylxylylene diisocyanate (1,3-bis(1-isocyanato-1-methylethyl benzene); 3-isocyanato-methyl-3,5,5,-trimethyl cyclohexyl isocyanate ; 4,4'-methylene bis(cyclohexyl isocyanate); meta-xylylene diisocyanate, or mixtures thereof.

In a non-limiting embodiment of the present invention, polyisocyanate can be combined with trifunctional or higher functional polyol and allowed to react to form polyurethane prepolymer and said prepolymer then can be reacted with diol, and amine-containing curing agent to form polyurethane(urea) polymer. In another non-limiting embodiment, polyisocyanate trifunctional or higher-functional polyol diol and amine-containing curing agent can be combined together in a one-pot process to form polyurethane (urea) polymer.

In a non-limiting embodiment, polyurethane(urea) of the present invention can comprise the reaction product of polyisocyanate; trifunctional or higher-functional polyol; diol; diamine; and optionally trifunctional or higher-functional polyamine. In a non-limiting embodiment, the ratio of the number of equivalents of said trifunctional or higher-functional polyol to the number of equivalents of said polyisocyanate can be from 0.05 : 1.0 to 0.4 to 1.0. In another non-limiting embodiment, the ratio of the number of equivalents of said diamine to the number of equivalents of said polyisocyanate can be from 0.05 : 1.0 to 0.4 to 1.0. In an alternate non-limiting embodiment, the ratio of the sum of the number of equivalents of said diamine plus said trifunctional or higher-functional polyamine to the number of equivalents of said polyisocyanate can be from 0.05 : 1.0 to 0.4 : 1.0.

In a non-limiting embodiment, polyurethane(urea) of the present invention can comprise the reaction product

of polyisocyanate; trifunctional or higher-functional polyol having molecular weight of less than or equal to 200 grams/mole; diol having molecular weight of less than or equal to 200 grams/mole; diamine; and optionally trifunctional or higher-functional polyamine. In this non-limiting embodiment, said trifunctional or higher-functional polyol can be trifunctional and/or tetrafunctional polyol. In an alternate non-limiting embodiment, said trifunctional or higher-functional polyamine can be trifunctional and/or tetrafunctional polyamine. In another non-limiting embodiment, the ratio of the number of equivalents of said trifunctional or higher-functional polyol to the number of equivalents of said polyisocyanate can be from 0.05 : 1.0 to 0.4 to 1.0. In further non-limiting embodiments, said ratio can be from 0.1 : 1.0 to 0.4 : 1.0, or from 0.15 : 1.0 to 0.4 : 1.0, or from 0.2 : 1.0 to 0.4 to 1.0, or from 0.1 : 1.0 to 0.3 : 1.0, or from 0.15 : 1.0 to 0.3 : 1.0, or from 0.2 : 1.0 to 0.3 : 1.0. In a non-limiting embodiment, the ratio of the number of equivalents of said diamine to the number of equivalents of said polyisocyanate can be from 0.05 : 1.0 to 0.4 to 1.0. In further non-limiting embodiments, said ratio can be from 0.1 : 1.0 to 0.4 : 1.0, or from 0.15 : 1.0 to 0.4 : 1.0, or from 0.2 : 1.0 to 0.4 to 1.0, or from 0.1 : 1.0 to 0.3 : 1.0, or from 0.15 : 1.0 to 0.3 : 1.0, or from 0.2 : 1.0 to 0.3 : 1.0. In an alternate non-limiting embodiment, the ratio of the sum of the number of equivalents of said diamine plus said trifunctional or higher-functional polyamine to the number of equivalents of said polyisocyanate can be from 0.05 : 1.0 to 0.4 : 1.0.

Active hydrogen-containing materials suitable for use in the present invention are varied and known in the art. Non-limiting examples can include hydroxyl-containing materials such as but not limited to polyols.

Non-limiting examples of trifunctional and higher-functional polyols for use in the present invention can include trimethylolethane, trimethylolpropane, di(trimethylolpropane), glycerol, pentaerythritol, di(pentaerythritol), cyclohexanetriol, ethoxylated trimethylolpropane, propoxylated trimethylolpropane, ethoxylated pentaerythritol, propoxylated pentaerythritol, or mixtures thereof.

Suitable diols for use in the present invention are varied and can be selected from those known in the art. Non-limiting examples can include aliphatic, cycloaliphatic, aromatic, heterocyclic, polymeric, oligomeric diiols and mixtures thereof.

Non-limiting examples of diols for use in the present invention can include those disclosed in the prior art and herein. Further non-limiting examples of diols for use in the present invention can include polyester diols, polycaprolactone diols, polyether diols, and polycarbonate diols with number average molecular weights ($M_n$) ranging from 200 to 5,000 grams/mole.

Suitable diols can include materials described by the following general formula:

(I')
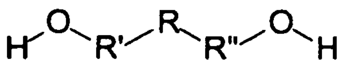

wherein R can represent $C_0$ to $C_{30}$ divalent linear or branched aliphatic, cycloaliphatic, aromatic, heterocyclic, or oligomeric saturated alkylene radical or mixtures thereof; $C_2$ to $C_{30}$ divalent organic radical containing at least one element selected from the group consisting of oxygen and silicon in addition to carbon and hydrogen atoms; $C_5$ to $C_{30}$ divalent saturated cycloalkylene radical; $C_5$ to $C_{30}$ divalent saturated heterocycloalkylene radical; and
R' and R" can each independently represent $C_1$ to $C_{30}$ divalent linear or branched aliphatic, cycloaliphatic, aromatic, heterocyclic, polymeric, oligomeric saturated alkylene radical or mixtures thereof.

Non-limiting examples of diols for use in the present invention can include ethylene glycol; propylene glycol; 1,2-butanediol; 1,4-butanediol; 1,3-butanediol; 2,2,4-trimethyl-1,3-pentanediol; 1,5-pentanediol; 2,4-pentanediol; 1,6 hexanediol; 2,5-hexanediol; 2-methyl-1,3 pentanediol; 2,4-heptanediol; 2-ethyl-1,3-hexanediol; 2,2-dimethyl-1,3-propanediol; 1,4-cyclohexanediol; 2,2-dimethyl-3-hydroxypropyl-2,2-dimethyl-3-hydroxypropionate; diethylene glycol; triethylene glycol; tetraethylene glycol; dipropylene glycol; tripropylene glycol; 1,4-cyclohexanedimethanol; 1,2-bis(hydroxymethyl)cyclohexane; 1,2-bis(hydroxyethyl)-cyclohexane; bishydroxypropyl hydantoin; the alkoxylation product of 1 mole of 2,2-bis(4-hydroxyphenyl)propane (i.e., bisphenol-A) and 2 moles of propylene oxide; and mixtures thereof.

In a non-limiting embodiment, polyisocyanate and at least one material selected from tri-functional or higher-functional polyol or mixtures thereof can be combined and allowed to react to form polyurethane prepolymer said prepolymer then can be reacted with amine-containing curing agent, wherein said amine-containing curing agent comprises mixture of diamine with at least one diol, and optionally trifunctional or higher-functional polyol, and/or trifunctional or higher-functional polyamine to form polyurethane(urea) or of the present invention.

In another non-limiting embodiment, polyisocyanate at least one material selected from tri-functional or higher-functional polyol, or mixtures thereof; at least one diol, diamine; and optionally trifunctional or higher-functional polyamine can be combined together and allowed to react in a one-pot process to form polyurethane (urea)

In a non-limiting embodiment, polyurethane(urea) of the present invention can be prepared by:

(a) reacting polyisocyanate, trifunctional or higher-functional polyol, and at least one diol to form polyurethane prepolymer; and

(b) reacting the polyurethane prepolymer with diol having a molecular weight of less than or equal to 200 and diamine.

In this non-limiting embodiment, the diol in (a) can include at least one polycaprolactone diol. In a further non-limiting embodiment, said polycaprolactone diol can have number average molecular weight ($M_n$) of from 200 to 10,000 grams/mole.
Suitable diamine for use in the present invention can include a wide variety of diamine containing curing agents known in the art. Non-limiting examples can include but are not limited to aliphatic polyamines, cycloaliphatic polyamines, aromatic polyamines and mixtures thereof. In a non-limiting embodiment, said diamine can be primary diamine. In another non-limiting embodiment, said diamine can be cyclic diamine. In a further non-limiting embodiment, said cyclic diamine can be aromatic diamine.

In alternate non-limiting embodiments, the diamine can be a polyamine having at least two functional groups independently chosen from primary amine ($-NH_2$), secondary amine (-NH-) and combinations thereof. In a further non-limiting embodiment, the diamine-containing curing agent can have at least two primary amine groups. In another non-limiting embodiment, the diamine-containing curing agent can comprise a diamine and optionally trifunctional or higher-functional polyamine and/or at least one polyol. Non-limiting examples of suitable polyols include those previously recited herein.

In an embodiment wherein it is desirable to produce polyurethane(ureas) having low color, the diamine-curing agent can be chosen such that it has relatively low color and/or it can be manufactured and/or stored in a manner as to prevent the amine from developing color (e.g., yellow).

Suitable diamine-containing curing agents for use in the present invention can include but are not limited to materials having the following chemical formula:

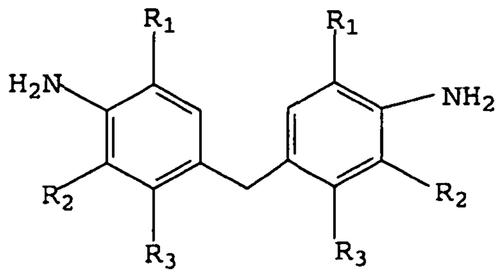

(XII')

wherein $R_1$ and $R_2$ can each be independently chosen from methyl, ethyl, propyl, and isopropyl groups, and $R_3$ can be chosen from hydrogen and chlorine. Non-limiting examples of suitable amine-containing curing agents can include but are not limited to those described in WO 2004/060951 A1 at paragraphs [0118] to [0125]

The polyurethane(urea) of the present invention can be prepared using a variety of techniques known in the art. In a non-limiting embodiment, the polyurethane (urea) can be prepared by introducing together polyisocyanate and trifunctional or higher functional polyol and allowing them to react to form polyurethane prepolymer and then introducing amine-containing curing agent, wherein said amine-containing curing agent comprises mixture of diamine with diol and optionally trifunctional or higher-functional polyol and/or polyamine, and optionally catalyst, and carrying out polymerization to form polyurethane (urea). In a non-limiting embodiment, each of the aforementioned ingredients each can be degassed prior to combining them. In another non-limiting embodiment, the prepolymer can be degassed, the remaining materials can be mixed together and degassed, and then the prepolymer and amine-containing curing agent, and optionally catalyst, can be combined and allowed to react.

In another non-limiting embodiment, the polyurethane(urea) of the present invention can be prepared by a one-pot process; the polyurethane(urea) can be prepared by intoducing together the polyisocyanate trifunctional or higher functional polyol, diol, diamine and optionally trifunctional or higher-functional polyamine; and optionally catalyst; and carrying out polymerization to form polyurethane (urea) In a non-limiting embodiment, each of the aforementioned ingredients each can be degassed prior to combining them.

In a non-limiting embodiment, polyurethane(urea) of the present invention can be prepared by:

(a) reacting polyisocyanate, trifunctional or higher-functional polyol, and diol to form polyurethane prepolymer; and
(b) reacting the polyurethane prepolymer with diol having a molecular weight of less than or equal to 200 grams/mole and diamine.

In this non-limiting embodiment, the diol in (a) can include a polycaprolactone diol. In a further non-limiting embodiment, the number average molecular weight ($M_n$) of the polycaprolactone diol can be from 200 to 5,000 grams/mole. In a further non-limiting embodiment, polyurethane(urea) of the present invention can be formed by the above reaction without the addition of catalyst. In another non-limiting embodiment, the polyurethane(urea) can be formed by the above reaction wherein catalyst is added.

Suitable catalysts can be selected from those known in the art. Non-limiting examples can include but are not limited to tertiary amine catalysts or tin compounds or mixtures thereof. In alternate non-limiting embodiments, the catalysts can be dimethyl cyclohexylamine or dibutyl tin dilaurate or mixtures thereof. In further non-limiting embodiments, degassing can take place prior to or following addition of catalyst.

In another non-limiting embodiment, wherein a lens can be formed, the mixture which can be optionally degassed can be introduced into a mold and the mold can be heated (i.e., thermal cure cycle) using a variety of conventional techniques known in the art. The thermal cure cycle can vary depending on the reactivity and molar ratio of the reactants. In a non-limiting embodiment, the thermal cure cycle can include heating the mixture of prepolymer, and diol, or prepolymer, diamine and diol; or heating the mixture of polyisocyanate polyol and diol, or polyisocyanate polyol diamine and diol, from room temperature to a temperature of 200°C over a period of from 0.5 hours to 120 hours; or from 80 to 150°C for a period of from 5 hours to 48 hours.

In a non-limiting embodiment, a urethanation catalyst can be used in the present invention to enhance the reaction of the polyurethane-forming materials. Suitable urethanation catalysts can vary, for example, suitable urethanation catalysts can include those catalysts that are useful for the formation of urethane by reaction of the NCO and OH-containing materials. Non-limiting examples of suitable catalysts can be chosen from the group of Lewis bases, Lewis acids and insertion catalysts as described in Ullmann's Encyclopedia of Industrial Chemistry, 5th Edition, 1992, Volume A21, pp. 673 to 674. In a non-limiting embodiment, the catalyst can be a stannous salt of an organic acid, such as but not limited to stannous octoate, dibutyl tin dilaurate, dibutyl tin diacetate, dibutyl tin mercaptide, dibutyl tin dimaleate, dimethyl tin diacetate, dimethyl tin dilaurate, 1,4-diazabicyclo[2.2.2]octane, and mixtures thereof. In alternate non-limiting embodiments, the catalyst can be zinc octoate, bismuth, or ferric acetylacetonate.

Further non-limiting examples of suitable catalysts can include tin compounds such as but not limited to dibutyl tin dilaurate, phosphines, tertiary ammonium salts and tertiary amines such as but not limited to triethylamine, triisopropylamine, dimethyl cyclohexylamine, N,N-dimethylbenzylamine and mixtures thereof. Such suitable tertiary amines are disclosed in United States Patent 5,693,738 at column 10, lines 6-38,

In alternate non-limiting embodiments, various known additives can be incorporated into the polyurethane(urea) of the present invention. Such additives can include but are not limited to light stabilizers, heat stabilizers, antioxidants, ultraviolet light absorbers, mold release agents, static (non-photochromic) dyes, pigments and flexibilizing additives, such as but not limited to alkoxylated phenol benzoates and poly(alkylene glycol) dibenzoates. Non-limiting examples of anti-yellowing additives can include 3-methyl-2-butenol, organo pyrocarbonates and triphenyl phosphite (CAS registry no. 101-02-0). Such additives can be present in an amount such that the additive constitutes less than 10 percent by weight, or less than 5 percent by weight, or less than 3 percent by weight, based on the total weight of the prepolymer. In alternate non-limiting embodiments, the aforementioned optional additives can be mixed with the polyisocyanat . In a further embodiment, the optional additives can be mixed with active hydrogen-containing material.

In a non-limiting embodiment, the polymerizable composition of the present invention can be subjected to curing conditions (such as thermal curing, for example) until it is at least partially cured. In non-limiting embodiments, the term "at least partially cured," can mean subjecting the polymerizable composition to curing conditions, wherein reaction of at least a portion of the reactive end-groups of said composition occurs, to form a solid polymerizate, such that said polymerizate can be demolded, and cut into test pieces, or such that it can be subjected to machining operations, including optical lens processing, or such that it is suitable for optical or ophthalmic lens applications.

In an alternate non-limiting embodiment, the polymerizable composition can be subjected to curing conditions (such as thermal curing, for example), such that a state of substantially complete cure is attained, wherein further curing under the same conditions results in no significant further improvement of polymer properties, such as hardness.

In a non-limiting embodiment, the resulting polyurethane(urea) of the present invention when cured can be solid, and essentially transparent such that it is suitable for optical or ophthalmic lens applications. In alternate non-limiting embodiments, the polyurethane(urea) can have a refractive index of at least 1.50, or at least 1.53, or at least 1.55, or at least 1.56, or at least 1.57, or at least 1.58, or at least 1.59, or at least 1.60, or at least 1.62, or at least 1.65. In further alternate non-limiting embodiments, the polyurethane(urea) when cured can have an Abbe number of at least 30, or at least 32, or at least 35, or at least 38, or at least 39, or at least 40, or at least 44.

In non-limiting embodiments, the polyurethane(urea) when cured can have adequately high hardness. In a non-limiting embodiment, hardness can be measured in accordance with ISO standard test method BS EN ISO 14577-1: 2002, using a Fischer Scope H-100 instrument, supplied by Fischer Technology, Inc., and reported as Martens Hardness, in the units of Newtons(N)/$mm^2$.

In a non-limiting embodiment, the polyurethane(urea) of the present invention when cured can have Martens Hardness (HM 0.3/15/0) of greater than 80, or greater than 100, or greater than 110, or greater than 120, or greater than 140 Newton/$mm^2$; or less than 250, or less than 200 Newton/$mm^2$.

In non-limiting embodiments, the polyurethane(urea) when cured can have adequately high thermal properties. In a non-limiting embodiment, thermal properties can be measured in accordance with ASTM D648 Method B, using an HDT Vicat instrument, supplied by CEAST USA, Inc Further, in a non-limiting embodiment, thermal properties of a polymerizate can be reported as Heat Distortion Temperature (i.e., temperature at which 0.254 mm (10 mils) deflection occurs).

In another non-limiting embodiment, the polyurethane(urea) of the present invention when cured can have Heat Distortion Temperature of at least 80 °C, or at least 100 °C, or at least 120 °C or at least 140 °C.

In a non-limiting embodiment, the polyurethane(urea) when cured can demonstrate good impact resistance/ strength. Impact resistance can be measured using a variety of conventional methods known to one skilled in the art.

In a non-limiting embodiment, the impact resistance can be measured using the Impact Energy Test as previously described herein and in the Examples.

In alternate non-limiting embodiments, using the Impact Energy Test as described herein, the polyurethane (urea) of the present invention when cured can produce a polymerizate with impact strength of at least 1.0 Joule, or at least 2.0 Joules, or at least 4.95 Joules.

In a non-limiting embodiment, the polyurethane(urea) of the present invention when cured can have low density. In non-limiting embodiments, the density can be from 1.0 to less than 1.3 grams/$cm^3$, or from 1.0 to less than 1.4 grams/$cm^3$, or from 1.0 to less than 1.45 grams/$cm^3$, or from 1.1 to less than 1.45 grams/$cm^3$, or from 1.1 to less than 1.4 grams/$cm^3$, or from 1.1 to less than 1.3 grams/$cm^3$. In a non-limiting embodiment, the density is measured using a DensiTECH instrument manufactured by Tech Pro, Incorporated. In a further non-limiting embodiment, the density is measured in accordance with ASTM D297.

Solid articles that can be prepared using the polyurethane(urea) polymerizate of the present invention include but are not limited to optical lenses, such as plano and ophthalmic lenses, sun lenses, windows, automotive transparencies, such as windshields, sidelights and backlights, and aircraft transparencies.

In a non-limiting embodiment, polyurethane(urea) polymerizate of the present invention can be used to prepare photochromic articles, such as lenses. In a further embodiment, the polymerizate can be transparent to that portion of the electromagnetic spectrum which activates the photochromic substance(s), i.e., that wavelength of ultraviolet (UV) light that produces the colored or open form of the photochromic substance and that portion of the visible spectrum that includes the absorption maximum wavelength of the photochromic substance in its UV activated form, i.e., the open form.

A wide variety of photochromic substances can be used in the present invention. In a non-limiting embodiment, organic photochromic compounds or substances can be used. In alternate non-limiting embodiments, the photochromic substance can be incorporated, e.g., dissolved, dispersed or diffused into the polymerizate, or applied as a coating thereto.

Non-limiting examples of suitable photochromic materials and ways of making photochromic articles can include but are not limited to those described in WO 2004/060951 A1 at paragraphs [0151] to [0163].

## EXAMPLES

### Experimental Methods for Characterizing Compositions and Properties

In the following examples, unless otherwise stated, the refractive index and Abbe number were measured on a multiple wavelength Abbe Refractometer Model DR-M2 manufactured by ATAGO Co., Ltd.; the refractive index and Abbe number of liquids were measured in accordance with ASTM-D1218; the refractive index and Abbe number of solids was measured in accordance with ASTM-D-542.

The density of solids was measured in accordance with ASTM-D792.

The viscosity was measured using a Brookfield CAP 2000+ Viscometer.

Percent Haze was measured in accordance with ASTM-D1003, using a ColorQuest XE instrument, manufactured by Hunter Associates Laboratory, Inc.

Hardness was measured in accordance with ISO standard test method BS EN ISO 14577-1:2002, using a Fischer Scope H-100 instrument, supplied by Fischer Technology, Inc., and was reported as Martens Hardness (HM 0.3/15/0), in the units of Newtons(N)/$mm^2$. As requireed in said standard test method, the following test parameters were specified: Maximum Total Load applied to sample was 0.3 Newtons (N), time period over which Maximum Total Load was applied to sample was 15 seconds, and the time of duration for which said Maximum Total Load was then applied to sample was 0 seconds. Therefore, the test results were designated with the term "HM 0.3/15/0" in order to reflect these three test parameters.

Heat Distortion Temperature (i.e., temperature at which deflection of 0.254 mm (10 mils) of the sample bar occurs) and Total Deflection Temperature (i.e., temperature at which deflection of 2.54 mm (100 mils) of the sample bar occurs), were measured in accordance with ASTM D648 Method B, using an HDT Vicat instrument, supplied by CEAST USA, Inc.

Impact testing was accomplished in accordance with the Impact Energy Test, as described herein, and the

results are reported in energy units (Joules). The Impact Energy Test consists of testing a flat sheet sample of polymerizate having a thickness of 3mm, and cut into a square piece approximately 4cm x 4cm. Said flat sheet sample of polymerizate is supported on a flat O-ring which is attached to top of the pedestal of a steel holder, as defined below. Said O-ring is constructed of neoprene having a hardness of 40 ± 5 Shore A durometer, a minimum tensile strength of 8.3 MPa, and a minimum ultimate elongation of 400 percent, and has an inner diameter of 25 mm, an outer diameter of 31 mm, and a thickness of 2.3 mm. Said steel holder consists of a steel base, with a mass of approximately 12 kg, and a steel pedestal affixed to said steel base. The shape of said steel pedestal is approximated by the solid shape which would result from adjoining onto the top of a cylinder, having an outer diameter of 75 mm and a height of 10 mm, the frustum of a right circular cone, having a bottom diameter of 75 mm, a top diameter of 25 mm, and a height of 8 mm, wherein the center of said frustum coincides with the center of said cylinder. The bottom of said steel pedestal is affixed to said steel base, and the neoprene O-ring is centered and affixed to the top of the steel pedestal. The flat sheet sample of polymerizate is centered and set on top of the O-ring. The Impact Energy Test is carried out by dropping steel balls of increasing weight from a distance of 50 inches (1.27 meters) onto the center of the flat sheet sample. The sheet is determined to have passed the test if the sheet does not fracture. The sheet is determined to have failed the test when the sheet fractures. As used herein, the term "fracture" refers to a crack through the entire thickness of the sheet into two or more separate pieces, or detachment of one or more pieces of material from the backside of the sheet (i.e., the side of the sheet opposite the side of impact). The impact strength of the sheet is reported as the impact energy that corresponds to the highest level (i.e., largest ball) at which the sheet passes the test, and it is calculated acording to the following formula:

$$E=mgd$$

Wherein E represent impact energy in Joules (J), m represents mass of the ball in kilograms (kg), g represents acceleration due to gravity (i.e., 9.80665 m/sec$^2$) and d represents the distance of the ball drop in meters (i.e., 1.27 m).

The NCO concentration of the prepolymer (Component A) was determined by reaction with an excess of n-dibutylamine (DBA) to form the corresponding urea followed by titration of the unreacted DBA with HCl in accordance with the following procedure.

<u>REAGENTS</u>

1. Tetrahydrofuran (THF), reagent grade.
2. 80/20 THF/propylene glycol (PG) mix. This solution was prepared in-lab by mixing 800 mls PG with 3.2 liters of THF in a 4-liter bottle.
3. DBA, dibutylamine certified ACS.
4. DBA/THF solution. 150 mL of DBA was combined with 750 mL of THF; it was mixed well and transfered to an amber bottle.
5. Hydrochloric acid, concentrated. ACS certified.
6. Isopropanol, technical grade.
7. Alcoholic hydrochloric acid, 0.2N. 75 ml of conc. HCl was slowly added to a 4-liter bottle of technical grade isopropanol while stirring with a magnetic stirrer; it was mixed for a minimum of 30 minutes. This solution was standardized using THAM (Tris hydroxyl methyl amino methane) asfollows: Into a glass 100-mL beaker, was weighed approximately 0.6g $(HOCH_2)_3CNH_2$ primary standard to the nearest 0.1 mg and the weight was recorded. 100 mL DI water was added and mixed to dissolve and titrated with the prepared alcoholic HCl. This procedure was repeated a minimum of one time and the values were averaged using the calculation below.

$$\text{Normality HCL} = \frac{(\text{Standard wt., grams})}{(\text{mLs HCl})\ (0.12114)}$$

<u>EQUIPMENT</u>

1. Polyethylene beakers, 200-mL, Falcon specimen beakers, No. 354020.
2. Polyethylene lids for above, Falcon No. 354017.
3. Magnetic stirrer and stirring bars.
4. Brinkmann dosimeter for dispensing or 10-mL pipet.

5. Autotitrator equipped with pH electrode.
6. 25-mL, 50-mL dispensers for solvents or 25-mL and 50-mL pipets.

PROCEDURE

1. Blank determination: Into a 220-mL polyethylene beaker was added 50 mL THF followed by 10.0 mL DBA/THF solution. The solution was capped and mixed with magnetic stirring for 5 minutes. 50 mL of the 80/20 THF/PG mix was added and titrated using the standardized alcoholic HCl solution and this volume was recorded. This procedure was repeated and these values averaged for use as the blank value.
2. In a polyethylene beaker was weighed 1.0 gram of prepolymer sample and the weight was recorded to the nearest 0.1 mg. 50 mL THF was added, the sample was capped and allowed to dissolve with magnetic stirring.
3. 10.0 mL DBA/THF solution was added, the sample was capped and allowed to react with stirring for 15 minutes.
4. 50 mL of 80/20 THF/PG solution was added.
5. The beaker was placed on the titrator and the titration was started. This procedure was repeated.

CALCULATIONS

$$\%NCO = \frac{(\text{mls Blank} - \text{mls Sample}) \times (\text{Normality HC1}) \times (4.2018)}{\text{Sample weight, g}}$$

$$IEW = \frac{(\text{Sample wt., grams}) \times (1000)}{(\text{mls Blank} - \text{mls Sample}) \times (\text{Normality HC1})}$$

IEW = Isocyanate Equivalent Weight

The SH groups within the product were determined using the following procedure. A sample size (0.1 mg) of the product was combined with 50 mL of tetrahydrofuran (THF)/propylene glycol (80/20) and stirred at room temperature until the sample was substantially dissolved. While stirring, 25.0 mL of 0.1 N iodine solution (which was commercially obtained from Aldrich 31, 8898-1) was added to the mixture and then allowed to react for a time period of from 5 to 10 minutes. To this mixture was added 2.0 mL concentrated HC1. The mixture was then titrated potentiometrically with 0.1 N sodium thiosulfate in the millivolt (mV) mode. A blank value was initially obtained by titrating 25.0 mL iodine (including 1 mL of concentrated hydrochloric acid) with sodium thiosulfate in the same manner as conducted with the product sample.

$$\%SH = \frac{(\text{mls Blank} - \text{mls Sample}) \times (\text{Normality } NA_2S_2O_3) \times (3.307)}{\text{Sample weight, g}}$$

Example 1. Synthesis of Polyurethane Prepolymer 1

4,4'-methylenebis (cyclohexyl isocyanate) (Desmodur W) (1.0 molar equivalent) was charged into a reactor with $N_2$ pad and heated to a temperature of 70'C. Then, 1, 1, 1 tris(hydroxymethyl) propane (TMP) (0.2 molar equivalent) was added to the reactor. When introduced into the reactor, the TMP dissolved slowly. During the slow dissolution the reaction underwent a short induction period prior to exhibiting a significant exotherm in temperature (approximately, $\Delta$ = 50'C). Care was taken to minimize the extent of the exotherm by keeping the reaction temperature below 120'C, which was achieved by adding the TMP to the reactor in portions. Once all of the TMP was added, the resultant reaction mixture was heated for 20 hours in the reactor at a temperature within the range of from 110-120°C. This reaction mixture represented Component A.

Prepolymer 1 had %NCO of 23.74% and viscosity of 90 cP at 73°C.

Prepolymer 2 and Prepolymer 3 were synthesized according to the same procedure as Prepolymer 1, with the

stoichiometry given in Table 1.

Table 1. Polyurethane Prepolymer Preparation

| Prepolymer (Component A) | TMP[1] (Molar Equiv) | Des W[2] (Molar Equiv) | NCO (%) | Viscosity 73°C (cP) |
|---|---|---|---|---|
| Prepolymer 1 | 0.20 | 1.00 | 23.74 | 90 |
| Prepolymer 2 | 0.28 | 1.00 | 20.75 | 2103 |
| Prepolymer 3 | 0.30 | 1.00 | 20.63 | 7000 |

[1]- TMP - 1,1,1-Tris(hydroxymethyl)propane, obtained from Aldrich, USA
[2]- Des W - 4,4'-Methylenebis(cyclohexyl isocyanate), Bayer Corporation

Table 2: Selected Properties of Chain Extended Polyurethane/Sulfur-containing Polyurethane Polymers

| Polymer (Components A+B) | Component A | Component B (Molar Equiv.) | Refractive Index Abbe | Impact** (J) | Haze* (%) | |
|---|---|---|---|---|---|---|
| Polymer 1 (not according to the present invention) | Prepolymer 3 | BDO (1.0) | 1.523, 50 | 13.3 J | 2.16 | |
| Polymer 2 (not according to the present invention) | Prepolymer 2 | DMDS (1.0) | 1.570, 44 | 2.47 J | 1.39 | |
| Polymer 3 (not according to the present invention) | Prepolymer 1 | DMDS (1.0) | 1.570, 43 | 13.3 J | 0.38 | |

Description of the abbreviations in Table 2:

BDO - 1,4-Butanediol, obtained from Aldrich, USA

DMDS - 2-Mercaptoethyl sulfide, obtained from Nisso-Maruzen Chemical Company, Japan

Comparative Example 1. Chain extension of polyurethane prepolymer 3 with 1,4-butanediol (Polymer 1)

Prepolymer 3 (1.0 eq.) and 1,4-BDO (1.0 eq.) were mixed together using two component reaction injection molding equipment. The temperature of the two components when mixed was 25°C for 1,4-BDO and 80°C for Prepolymer 3. The resultant reaction mixture was then introduced into a 3 mm thick flat sheet and ophthalmic lens mold set-up(s). The flat sheet and lens mold set-ups were then placed in a convection oven and heated. The materials were heated at a temperature of 110°C for 76 hours. After the heating period, the temperature of the oven was reduced to 80°C over a 30-minute time interval. The materials were then removed from the oven and demolded. The resultant polymerizate, Polymer 1, had the following properties: refractive index ($n_e^{20}$) 1.523, Abbe Number 50, Impact strength 13.3 Joules, Haze 2.16%, Martens Microhardness (HM 0.3/15/0) 135 N/mm$^2$, Heat Distortion Temperature 113 °C; Total Deflection Temperature 121 °C.

Comparative Example 2. Chain extension of polyurethane prepolymer 2 with DMDS (Polymer 2)

Prepolymer 2 (1.0 eq.) was mixed together with DMDS (1.0 eq.) using two component reaction injection molding equipment. The temperature of the two components when mixed was 25°C for DMDS and 70°C for Prepolymer 2. The resultant reaction mixture was then introduced into a 3 mm thick flat sheet and ophthalmic lens mold set-up. The flat

sheet and lens mold set-ups were then placed in a convection oven and heated. The materials were heated at a temperature of 110°C for 76 hours. After the heating period, the temperature of the oven was reduced to 80°C over a 30-minute time interval. The materials were then removed from the oven and demolded. The resultant polymerizate, Polymer 2, had the following properties: refractive index ($n_e^{20}$) 1.570, Abbe Number 44, Impact strength 2.47 Joules, Haze 1.39%, Martens Microhardness (HM 0.3/15/0) 132 N/mm$^2$, Heat Distortion Temperature 101 °C; Total Deflection Temperature 105 °C.

Comparative Example 3. Chain extension of polyurethane prepolymer 1 with DMDS (Polymer 3)

Prepolymer 1 (1.0 eq.) was mixed together with DMDS (1.0 eq.) using two component reaction injection molding equipment. The temperature of the two components when mixed was 25°C for DMDS and 70°C for Prepolymer 1. The resultant reaction mixture was then introduced into a 3 mm thick flat sheet and ophthalmic lens mold set-up. The flat sheet and lens mold set-ups were then placed in a convection oven and heated. The materials were heated at a temperature of 110'C for 76 hours. After the heating period, the temperature of the oven was reduced to 80°C over a 30-minute time interval. The materials were then removed from the oven and demolded. The resultant polymerizate, Polymer 3, had the following properties: refractive index ($n_e^{20}$) 1.570, Abbe Number 43, Impact strength 13.3 Joules, Haze 0.38%, Martens Microhardness (HM 0.3/15/0) 118 N/mm$^2$, Heat Distortion Temperature 95 °C; Total Deflection Temperature 106 °C.

Table 3. Polyurethane Prepolymer Preparation

| Prepolymer (Component A) | TMP[1] (Molar Equiv) | Des W[2] (Molar Equiv) | Reaction time at 110°C - 120°C (h) | NCO (%) | Viscosity 73°C (cP) |
|---|---|---|---|---|---|
| Prepolymer 1 | 0.20 | 1.00 | 20 | 23.74 | 90 |
| Prepolymer 3 | 0.30 | 1.00 | 24 | 20.63 | 7000 |
| [1]- TMP - 1,1,1-Tris(hydroxymethyl)propane, obtained from Aldrich, USA<br>[2]_ Des W - 4,4'-methylenebis(cyclohexyl isocyanate, Bayer Corporation | | | | | |

Comparative Example 4. Chain extension of polyurethane Prepolymer 1 with a mixture of DMDS and aromatic diamine (Polymer 4)

Prepolymer 1 (1.0 eq.) was mixed together with a mixture of DMDS (dimercaptodiethylsulfide) (0.8 eq.) and DETDA (3,5-diethyl-2,4-toluenediamine and 3,5-diethyl-2,6-toluenediamine, mixture approximately 80%/20%) (0.2 eq.) using two component reaction injection molding equipment. The temperature of the two components when mixed was 25°C for DMDS/DETDA mixture and 70°C for Prepolymer 1. The resultant reaction mixture was then introduced into a 3 mm thick flat sheet and ophthalmic lens mold set-up. The flat sheet and mold set-up were then placed in a convection oven and heated. The materials were heated at a temperature of 110°C for 76 hours. After the heating period, the temperature of the oven was reduced to 80°C over a 30-minute time interval. The materials were then removed from the oven and demolded. The resultant polymerizate, Polymer 4, had the following properties: refractive index ($n_e^{20}$) 1.565, Abbe Number 43, Impact strength 3.2 Joules, Haze 0.72%, Martens Microhardness (HM 0.3/15/0) 130 N/mm$^2$, Heat Distortion Temperature 105 °C; Total Deflection Temperature 117 °C.

Example 2. Chain extension of polyurethane Prepolymer 3 with a mixture of Ethylene glycol and aromatic diamine (Polymer 5)

Prepolymer 3 (1.0 eq.) was mixed together with a mixture of Ehylene glycol (0.362 eq.) and DETDA (3,5-diethyl-2,4-toluenediamine and 3,5-diethyl-2,6-toluenediamine, mixture approximately 80%/20%) (0.378 eq.) using two component reaction injection molding equipment. The temperature of the two components when mixed was 25°C for Ethylene glycol/DETDA mixture and 70°C for Prepolymer 3. The resultant reaction mixture was then introduced into a 3 mm thick flat sheet and ophthalmic lens mold set-up. The flat sheet and mold set-up were then placed in a convection oven and heated. The materials were heated at a temperature of 110°C for 76 hours. After the heating period, the temperature of the oven was reduced to 80°C over a 30-minute time interval. The materials were then removed from the oven and demolded. The resultant polymerizate, Polymer 5, had the following properties: refractive index ($n_e^{20}$) 1.532, Abbe Number 47, Impact strength ≥ 13.3 Joules, Haze 1.35%, Martens Hardness (HM 0.3/15/0) 150 N/mm$^2$, Heat Distortion Temperature 147 °C, Total Deflection Temperature 170 °C.

The following provides the ball sizes used in the Impact Energy test for this example, and the corresponding

impact energy.

| Ball weight, kg | Impact Energy, J |
|---|---|
| 0.016 | 0.20 |
| 0.022 | 0.27 |
| 0.032 | 0.40 |
| 0.045 | 0.56 |
| 0.054 | 0.68 |
| 0.067 | 0.83 |
| 0.080 | 1.00 |
| 0.094 | 1.17 |
| 0.110 | 1.37 |
| 0.129 | 1.60 |
| 0.149 | 1.85 |
| 0.171 | 2.13 |
| 0.198 | 2.47 |
| 0.223 | 2.77 |
| 0.255 | 3.17 |
| 0.286 | 3.56 |
| 0.321 | 3.99 |
| 0.358 | 4.46 |
| 0.398 | 4.95 |
| 1.066 | 13.30 |

## Claims

**1.** Polyurethane(urea) comprising the reaction product of polyisocyanate, trifunctional or higher-functional polyol having molecular weight of less than or equal to 200 grams/mole, diol having molecular weight of less than or equal to 200 grams/mole, and diamine and optionally trifunctional or higher-functional polyamine.

**2.** The polyurethane(urea) of claim 1 prepared by:

(I)

(a) reacting said polyisocyanate and said trifunctional or higher-functional polyol to form polyurethane prepolymer; and
(b) reacting said polyurethane prepolymer and said diol and said
diamine to form said polyurethane(urea), wherein (b) optionally further comprises material chosen from trifunctional or higher-functional polyamine, trifunctional or higher-functional polyol or mixtures thereof or by

(II) reacting said polyisocyanate, said trifunctional or higher-functional polyol, said diol and said diamine in a one-pot process.

**3.** The polyurethane(urea) of claim 1 wherein said diamine is chosen from 2,4-diamino-3,5-diethyl-toluene, 2,6-diamino-3,5-diethyl-toluene, and mixtures thereof; 4,4'-methylenebis(3-chloro-2,6-diethylaninline); 4,4'-methylenebis(2-chloroaniline); materials having the following chemical formula:

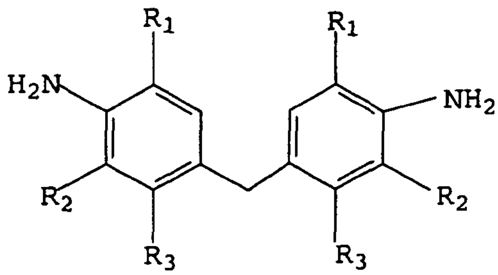

wherein $R_1$ and $R_2$ is each independently methyl, ethyl, propyl, or isopropyl, and $R_3$ is hydrogen or chlorine; and mixtures thereof.

4. The polyurethane(urea) of claim 1 wherein said diamine is primary diamine or cyclic diamine.

5. The polyurethane(urea) of claim 4 wherein said cyclic diamine is aromatic diamine.

6. The polyurethane(urea) of claim 1 further comprising trifunctional or higher-functional polyamine.

7. The polyurethane(urea) of any of the preceding claims when adapted to an optical article, having a refractive index of at least 1.55, and an Abbe number of at least 30.

8. A method of preparing polyurethane(urea) comprising:

(a) reacting polyisocyanate with trifunctional or higher functional polyol, said polyol having molecular weight of less than or equal to 200 grams/mole, to form polyurethane prepolymer; and
(b) reacting said polyurethane prepolymer with diol, said diol having molecular weight of less than or equal to 200 grams/mole, and diamine to form said polyurethane(urea); or

reacting polyisocyanate, trifunctional or higher-functional polyol having molecular weight of less than or equal to 200 grams/mole, diol having molecular weight of less than or equal to 200 grams/mole, and diamine, in a one-pot process.

**Patentansprüche**

1. Polyurethanharnstoff enthaltend das Reaktionsprodukt eines Polyisocyanats, eines trifunktionellen oder höher funktionellen Polyols mit einem Molekulargewicht von weniger oder gleich 200 g/mol, eines Diols mit einem Molekulargewicht von weniger oder gleich 200 g/mol und eines Diamins und optional eines trifunktionellen oder höher funktionellen Polyamins.

2. Polyurethanharnstoff nach Anspruch 1, hergestellt durch:

(I)

(a) Umsetzen dieses Polyisocyanats und dieses trifunktionellen oder höher funktionellen Polyols, um ein Polyurethanprepolymer zu bilden, und
(b) Umsetzen dieses Polyurethanprepolymers und dieses Diols und dieses Diamins, um diesen Polyurethanharnstoff zu bilden, wobei (b) optional zusätzlich ein Material enthält, das ausgewählt ist aus trifunktionellem oder höher funktionellem Polyamin, trifunktionellem oder höher funktionellem Polyol oder Mischungen davon, oder durch

(II) Umsetzen dieses Polyisocyanats, dieses trifunktionellen oder höher funktionellen Polyols, dieses Diols und dieses Diamins in einem Eintopfverfahren.

3. Polyurethanharnstoff nach Anspruch 1, wobei dieses Diamin ausgewählt ist aus 2,4-Diamino-3,5-diethyltoluol, 2,6-Diamino-3,5-diethyltoluol und Mischungen davon, 4,4'-Methylen-bis(3-chlor-2,6-diethylanilin), 4,4'-Methylen-bis(2-chloranilin), Stoffen mit der folgenden chemischen Formel:

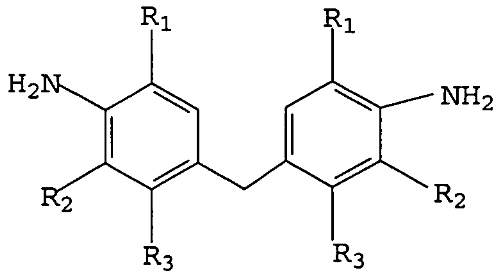

worin $R_1$ und $R_2$ jeweils unabhängig voneinander Methyl, Ethyl, Propyl oder Isopropyl sind und $R_3$ gleich Wasserstoff oder Chlor ist, und Mischungen davon.

**4.** Polyurethanharnstoff nach Anspruch 1, wobei dieses Diamin ein primäres Diamin oder cyclisches Diamin ist.

**5.** Polyurethanharnstoff nach Anspruch 4, wobei dieses cyclische Diamin ein aromatisches Diamin ist.

**6.** Polyurethanharnstoff nach Anspruch 1, der weiterhin trifunktionelles oder höher funktionelles Polyamin umfasst.

**7.** Polyurethanharnstoff nach einem der vorstehenden Ansprüche, wenn an einen optischen Gegenstand adaptiert, mit einem Brechungsindex von wenigstens 1,55 und einer Abbe Zahl von wenigstens 30.

**8.** Verfahren zur Herstellung von Polyurethanharnstoff, umfassend:

(a) Umsetzen von Polyisocyanat mit trifunktionellem oder höher funktionellem Polyol, wobei dieses Polyol ein Molekulargewicht von weniger oder gleich 200 g/mol aufweist, um ein Polyurethanprepolymer zu bilden, und
(b) Umsetzen dieses Polyurethanprepolymers mit Diol, wobei dieses Diol ein Molekulargewicht von weniger oder gleich 200 g/mol aufweist, und Diamin, um diesen Polyurethanharnstoff zu bilden, oder

Umsetzen von Polyisocyanat, trifunktionellem oder höher funktionellem Polyol mit einem Molekulargewicht von weniger oder gleich 200 g/mol, Diol mit einem Molekulargewicht von weniger oder gleich 200 g/mol und Diamin in einem Eintopfverfahren.

## Revendications

**1.** Polyuréthane-urée comprenant le produit de la réaction d'un polyisocyanate, d'un polyol trifonctionnel ou fonctionnel supérieur ayant une masse moléculaire inférieure ou égale à 200 grammes/mole, d'un diol ayant une masse moléculaire inférieure ou égale à 200 grammes/mole, et d'une diamine et éventuellement d'une polyamine trifonctionnelle ou fonctionnelle supérieure.

**2.** Polyuréthane-urée selon la revendication 1 préparée par :

(I)

(a) la réaction dudit polyisocyanate et dudit polyol trifonctionnel ou fonctionnel supérieur pour former un prépolymère de polyuréthane ; et
(b) la réaction dudit prépolymère de polyuréthane et dudit diol et de ladite diamine pour former ladite polyuréthane-urée, où (b) comprend éventuellement en outre un matériau choisi parmi une polyamine trifonctionnelle ou fonctionnelle supérieure, un polyol trifonctionnel ou fonctionnel supérieur ou des mélanges de ceux-ci ou par

(II) la réaction dudit polyisocyanate, dudit polyol trifonctionnel ou fonctionnel supérieur, dudit diol et de ladite diamine dans un procédé monotope.

3. Polyuréthane-urée selon la revendication 1 où ladite diamine est choisie parmi le 2,4-diamino-3,5-diéthyl-toluène, le 2,6-diamino-3,5-diéthyl-toluène, et des mélanges de ceux-ci ; la 4,4'-méthylènebis(3-chloro-2,6-diéthylaniline) ; la 4,4'-méthylènebis(2-chloroaniline) ; des matériaux ayant la formule chimique suivante :

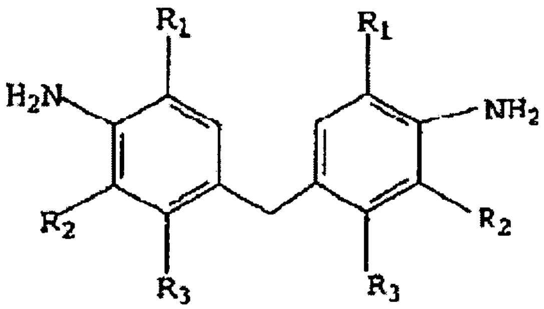

dans laquelle $R_1$ et $R_2$ représentent chacun indépendamment un groupe méthyle, éthyle, propyle ou isopropyle, et $R_3$ représente un atome d'hydrogène ou de chlore ; et des mélanges de ceux-ci.

4. Polyuréthane-urée selon la revendication 1 où ladite diamine est une diamine primaire ou une diamine cyclique.

5. Polyuréthane-urée selon la revendication 4, où ladite diamine cyclique est une diamine aromatique.

6. Polyuréthane-urée selon la revendication 1 comprenant en outre une polyamine trifonctionnelle ou fonctionnelle supérieure.

7. Polyuréthane-urée selon l'une quelconque des revendications précédentes, quand adaptée à un article optique, présentant un indice de réfraction d'au moins 1,55 et un nombre d'Abbe d'au moins 30.

8. Procédé de préparation de polyuréthane-urée comprenant :

(a) la réaction d'un polyisocyanate avec un polyol trifonctionnel ou fonctionnel supérieur, ledit polyol ayant une masse moléculaire inférieure ou égale à 200 grammes/mole, pour former un prépolymère de polyuréthane ; et
(b) la réaction dudit prépolymère de polyuréthane avec un diol, ledit diol ayant une masse moléculaire inférieure ou égale à 200 grammes/mole, et une diamine pour former ladite polyuréthane-urée ; ou

la réaction d'un polyisocyanate, d'un polyol trifonctionnel ou fonctionnel supérieur ayant une masse moléculaire inférieure ou égale à 200 grammes/mole, d'un diol ayant une masse moléculaire inférieure ou égale à 200 grammes/mole et d'une diamine, dans un procédé monotope.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2004060951 A1
- US 5693738 A


### Non-patent literature cited in the description


- Ullmann's Encyclopedia of Industrial Chemistry. 1992, vol. A21, 673-674